# EUROPÄISCHE PATENTANMELDUNG

(11) **EP 1 072 872 A2**
(43) Veröffentlichungstag der Anmeldung: **31.01.2001**
(21) Anmeldenummer: 00111322.4
(22) Anmeldetag: 26.05.2000
(51) Int. Cl.: G01F 23/38, G01F 23/54, G01F 23/62

(54) **Einrichtung für die Messung des Füllstandes in einem eine Flüssigkeit aufnehmenden Behälter**

(30) Priorität: 29.07.1999 DE 19935652
(71) Anmelder: GEIGER TECHNIK GmbH, D-82467 Garmisch-Partenkirchen (DE)
(72) Erfinder: Geiger, Albert, 82467 Garmisch-Partenkirchen (DE); Altenhofer, Peter, 82481 Mittenwald (DE); Lohse, Georg, Dr., 82237 Steinebach (DE); Seibold, Paul, Dr., 82491 Grainau (DE)
(74) Vertreter: Flosdorff, Jürgen, Dr.

(57) **Zusammenfassung**

Die Erfindung richtet sich auf eine Einrichtung für die Messung des Füllstandes in einem, eine Betriebs- oder Verbrauchsflüssigkeit aufnehmenden Behälter mit einem in die Flüssigkeit eintauchenden, den Füllstand im Behälter darstellenden Schwimmer (1), wobei dieser Schwimmer mit einem Magneten (3) direkt oder indirekt verbunden ist und wobei außerhalb der Bewegungsbahn des Schwimmers ein Sensor (8) angeordnet ist, der die Richtungsänderungen der Feldlinien (9) des vom Magneten erzeugten magnetischen Feldes, abhängig von der Stellung und/oder Lage des durch den Schwimmer bewegten Magneten mißt und elektrisch an eine Anzeige weitergibt. Eine solche Einrichtung ist besonders für die kontinuierliche Messung des Flüssigkeitsniveaus und insbesondere auch für die Messung des Füllstandes einer Flüssigkeit geeignet, die leicht brennbar ist oder leicht entzündbare Gase erzeugt.

## Beschreibung

Die Erfindung richtet sich auf die Messung und Anzeige des Füllstandes einer Flüssigkeit in einem Behälter. Die Messung und Anzeige des Flüssigkeitsniveaus in einem Flüssigkeitsvorratsbehälter ist Bestandteil vieler technischer Einrichtungen und Systeme und ein aus den vielfachen Anwendungsmöglichkeiten herausgegriffenes Beispiel ist die Kraftfahrzeugindustrie, wenn man z.B. an den Treibstofftank, die Bremsanlage, die Scheibenwaschanlage und die Zentralschmierung denkt.

Sofern es nicht möglich ist, den Flüssigkeitsfüllstand in einem die Flüssigkeit aufnehmenden Behälter, z.B. durch in die Wand eingelassener Schaugläser, direkt abzulesen, wird in aller Regel mit Schwimmern gearbeitet, die, je nach ihrer vom Flüssigkeitsniveau abhängigen Lage einen Stromkreis schließen oder öffnen, der mindestens als Warnung, einen Mindestflüssigkeitsstand, der nicht unterschritten werden soll, anzeigt.

Wenn die Flüssigkeit, deren Füllstand gemessen und angezeigt werden soll, eine solche ist, die Arbeit verrichten soll, z.B. Druck ausüben, wird man bestrebt sein, sie in einem geschlossenen Kreislauf mit möglichst geringen Verlusten zu halten, d.h., die Flüssigkeit, z.B. Drucköl, wird dem Vorratsbehälter auf einer Seite entnommen und, nachdem sie ihre Arbeit leistete, diesem wieder zugeführt. In diesem Falle ist nur mit geringen Verlusten zu rechnen, z.B. durch Leckagen, und man sieht es für die Sicherheit als ausreichend an, wenn jener Füllstand angezeigt wird, der für das sichere Funktionieren der Anlage nicht unterschritten werden soll. Wenn der in dieser Beschreibung von nun an 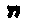 Schwimmer" genannte Schwimmer eine Lage eingenommen hat, die dem niedrigsten tolerierten Füllstand entspricht, wird durch den Schwimmer ein Kontakt geschlossen, der für den Benutzer eine Warneinrichtung, z.B. eine Lampe, betätigt. Vielfach werden mit sogenannten Niveauschaltern auch zwei Füllstände in einem Behälter angezeigt, nämlich 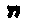 ganz voll" und die Warnstellung 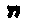 fast ganz leer".

Anders verhält es sich, wenn die Arbeit leistende Flüssigkeit, sich durch ihre Arbeitsleistung verbraucht, wie das z.B. bei einem flüssigen Treibstoff in einem Tank der Fall ist. Dann möchte der Benutzer nicht nur wissen, ob der Tank voll oder fast leer ist, sondern häufig gehört zu seiner Planung auch das Wissen, wie weit er noch mit der vorhandenen Tankfüllung fahren kann und ob er unterwegs nachtanken muß. In einem solchen Fall sollte der Behälterinhalt kontinuierlich gemessen und angezeigt werden. Die übliche Methode durch den auf- und abbewegten Schwimmer elektrische Kontakte zu schließen, häufig sogenannte 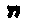 Reed-Kontakte", kann in einem solchen Fall nicht herangezogen werden, zumal diese Kontakte in allen Fällen, in denen es sich um eine leicht brennbare Flüssigkeit handelt, sehr gut gegen den eigentlichen Flüssigkeitsinhalt abgekapselt sein müssen, damit bei einem möglicherweise entstehenden Funken kein Treibstoffgas gezündet werden kann.

Der Erfindung lag die Aufgabe zugrunde, eine Einrichtung für die Messung und Anzeige des Füllstandes in einem Flüssigkeit aufnehmenden Behälter zu schaffen., die sowohl für die Messung bestimmter Flüssigkeitsniveaus als insbesondere auch die kontinuierliche Messung geeignet ist, die in dem Beälter möglichst wenig Raum, insbesondere in radialer Richtung, beansprucht, nicht störanfällig und damit zuverlässig ist, exakte Meßwerte ermitteln läßt einfach für beliebige Behältergeometrien kalibrierbar ist und auch für unterschiedliche Flüssigkeiten, z.B. nicht brennbare und brennbare, elektrisch nicht und 'elektrisch leitende Flüssigkeiten anwendbar ist.

Die Lösung dieser Aufgabe definieren die Merkmale des Anspruchs 1.

Vorteilhafte Ausgestaltungen der Erfindung ergeben sich aus den Unteransprüchen.

Die erfindungsgsemäße Einrichtung für die insbesondere kontinuierliche Messung des Füllstandes in einem, eine Betriebs- oder Verbrauchsflüssigkeit aufnehmenden Behälter mit einem in die Flüssigkeit eintauchenden, den Füllstand im Behälter darstellenden Schwimmer verwendet einen Schwimmer, der mit einem Magneten direkt oder indirekt verbunden ist und außerhalb der Bewegungsbahn des Schwimmers einen Sensor, der die Richtungsänderungen der Feldlinien des vom Magneten erzeugten Magnetfeldes abhängig von der Stellung und/oder Lage des durch den Schwimmer bewegten Magneten mißt und elektrisch an eine Anzeige weitergibt.

Sensoren, die die Richtung der Feldlinien eines Magnetfeldes messen, haben den großen Vorteil, daß man für die Messung die Stärke des Magnetfeldes nicht zu beachten oder zu modulieren braucht.

Dabei kann der Magnet Bestandteil des Schwimmers sein und bei der Auf- und Abbewegung desselben an einem feststehenden Sensor vorbeigeführt werden oder der Magnet kann durch die Bewegung des Schwimmers, ohne ein Bestandteil desselben zu sein, bewegt, z.B. auch gedreht oder verschwenkt werden. Dabei kann die Drehachse außerhalb und im Winkel der Achse des Schwimmers oder auch in der Hauptachse desselben liegen, d.h. der Schwimmer kann z.B. über einen Arm einen an diesem angebrachten Magneten verschwenken oder der Schwimmer kann selbst mit der Füllstandsänderung im Behälter drehbahr gelagert sein und auf diese Weise den Magneten drehen.

Um den Meßweg nicht unnötig auszudehnen kann nach einem weiteren Merkmal der Erfindung auf den Schwimmer eine seine Auftriebskraft reduzierende Kraft, z.B. durch eine Feder, z.B. Spiral- oder Blattfeder ausgeübt werden. Wird die Gewichtskraft des Schwimmers bei leerem Behälter durch die Federkraft kompensiert, so ist dieses Messprinzip geeignet, geringste. Füllstände anzuzeigen.

Außerdem kann der Schwimmer über seine Höhe unterschiedliche Horizontalquerschnitte aufweisen, z.B. kegelstumpf- oder pyramidenförmig gestaltet sein, um seinen Auftrieb in unterschiedlichen Stellungen in Flüssigkeit zu beeinflussen.

Die Erfindung ist nachfolgend an einigen, keinen Anspruch auf Vollständigkeit erhebenden Ausführungsbeispielen anhand der Zeichnung erläutert. Es stellen dar:
- Fig. 1: eine einfache Ausführungsform einer Einrichtung nach der Erfindung, schematisch und in der Seitenansicht;
- Fig. 2: die Stellung des Magneten eines Schwimmers nach Fig. 1 in verschiedenen Füllstandsstellungen im Verhältnis zum fixen Sensor, wobei die eingezeichneten drei Stellungen übertrieben weit auseinandergelegt wurden;
- Fig. 3: eine weitere Ausführungsform der Erfindung in der Ansicht und im Maßstab der Fig. 1;
- Fig. 4: eine weitere Ausführungsvariante der Erfindung;
- Fig. 5: eine Aufsicht auf den Schwimmer der Einrichtung nach Fig. 4.

Für die folgende Beschreibung anhand der Zeichnung muß man sich die dargestellten und im einzelnen benannten Teile als eine in den die Flüssigkeit aufnehmenden Behälter eingesetzte Einrichtung vorstellen, d.h. die Einrichtung ist Bestandteil eines aus Gründen der Fertigung meist mehrteiligen Gehäuses, das in den Figuren nur dort angedeutet ist, wo es unbedingt notwendig erschien.

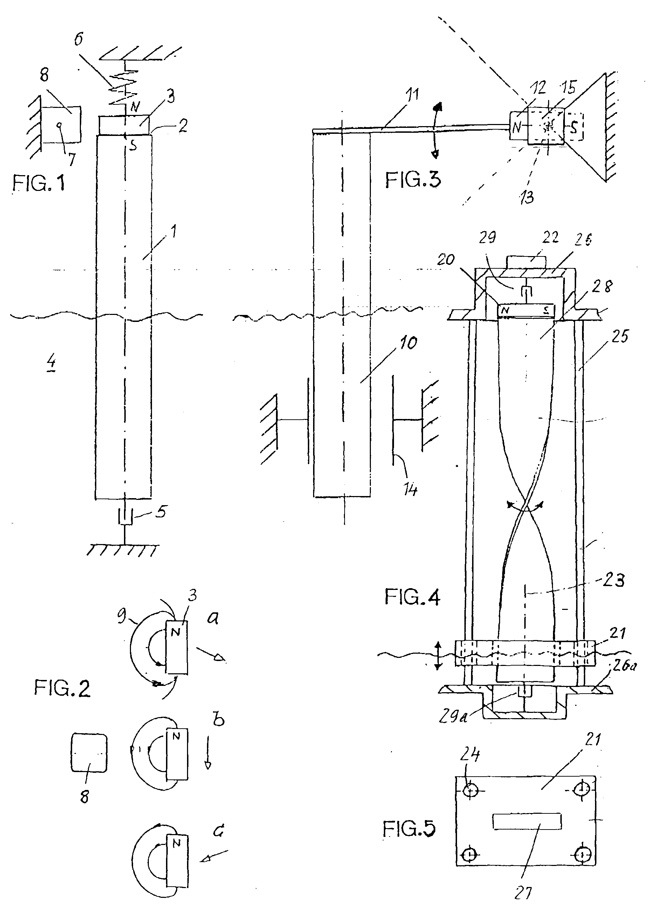

Bei dem einfachen Ausführungsbeispiel nach Fig. 1 ist ist 1 ein in diesem Fall zylindrischer Schwimmer, auf dessen oberer Stirnfläche 2 ein Permanentmagnet 3 befestigt ist. Der Schwimmer 1 wird bei dem dargestellten Beispiel in der Flüssigkeit 4 senkrecht gehalten durch eine Führung 5 am Behälterboden und eine Feder 6 auf der gegenüberliegenden Seite. Je nach den häufig durch die Behältergeometrie vorgegebenen Bedingungen können auch Linearführung 5 und Feder 6 bezüglich ihrer Lage vertauscht werden. Die Feder 6, gleich ob von oben oder unten wirkend, dient dazu, um die der Auftriebskraft entgegenwirkende Gewichtskraft bei leerem Behälter auszugleichen, weil dann die vertikale Schwimmerbewegung reduziert wird und die Messung bereits bei geringer Füllung funktioniert.

Durch die je nach Füllstandsänderung eintretende vertikale Bewegung des Schwimmers wird auch der Magnet 3 vertikal bewegt, wodurch sich für einen Fixpunkt 7 außerhalb des Schwimmers die Richtung der magnetischen Feldlinien ändert. Diese Änderung der Richtung der magnetischen Feldlinien wird durch einen geeigneten, gegenüber dem bewegten Magneten feststehenden Sensor 8 erfaßt, der also den Fixpunkt 7 darstellt. Solche Sensoren stehen zur Verfügung z.B. in Form der sogenannten 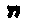 GMR-Sensoren" (GMR = Giant Magneto Resistor).

Stark vereinfacht und sehr schematisch veranschaulicht Fig. 2 die von dem Sensor 8 bezüglich der Richtung gemessenen Feldlinien 9 des Magneten 3 je nach Stellung des sich je nach Füllstandsänderung auf- oder abbewegenden Magneten, wobei die Pfeile unter den Bezeichnungen a, b und c jeweils die hauptsächlich vom Sensor 8 gemessene Feldlinienrichtung angibt.

Die Stellungen a, b und c sind nur wegen einer übersichtlicheren Darstellung so weit auseinandergezogen gezeichnet; tatsächlich beträgt der vertikale Gesamtweg des Schwimmers 1 zwischen Minimal- und Maximalfüllstand nur wenige Millimeter, z.B. 3-5 mm.

Bei einem weiteren, in Fig. 3 dargestellten Ausführungsbeispiel für die Umsetzung der Erfindung ist der Schwimmer 10 auf seiner oberen Stirnfläche mit einem Arm verbunden, der beispielsweise eine Blattfeder 11 sein kann, die an ihrem dem Schwimmer entgegengesetzten Ende einen Magneten 12 trägt. Die Blattfeder 11 mit Magnet 12 ist in dem Behälter, dessen Flüssigkeitsspiegel gemessen werden soll, um eine waagerechte Achse 13 schwenkbar gelagert und kann beispielsweise innerhalb der gestrichelten Linien in einem Winkel von insgesamt 90° je nach Füllstand verschwenkt werden.

Damit die Blattfeder 11 eine den Auftrieb des Schwimmers reduzierende Kraft ausüben kann, d.h. der Schwimmer sich bei der Aufwärtsbewegung nicht in der Flüssigkeit schräg stellt und ohne Kraftausübung um die Achse 13 dreht, muß der Schwimmer 10 innerhalb gewisser Toleranzen senkrecht gehalten werden, wozu die Führung 14 dient. Auch in diesem Falle wirkt also die Kraft der Blattfeder 11 der Auftriebskraft des Schwimmers 10 entgegen und verringert daher die vertikale Schwimmerbewegung, jedoch wird in diesem Fall die Vertikalbewegung des Schwimmers 10 über die Blattfeder 11 in eine Schwenkbewegung des an der Blattfeder befestigten Magneten 12 umgewandelt. 15 ist der zweckmäßig außerhalb des Gehäuses angebrachte, im Verhältnis zum bewegten Magneten fixe, die Richtung der magnetischen Feldlinien messende Sensor.

In vielen Fällen, beispielsweise im Motorraum eines Kraftfahrzeuges, ist der Platz für einen eine Flüssigkeit aufnehmenden Behälter beschränkt, worauf die Behältergeometrie Rücksicht nehmen muß. Dies kann dazu führen, daß der Behälter in horizontalen und/oder vertikalen Querschnitten asymmetrisch mit der Folge ist, daß die tatsächliche Füllstandshöhe nicht in allen Schwimmerstellungen dem verbrauchten oder noch vorhandenen Flüssigkeitsvolumen entspricht. Wenn also z.B. der Beälter schräg verlaufende Wände aufweist, wird bei Erreichen genau des halben Flüssigkeitsniveaus im Verhältnis zur maximalen Füllung nicht auch immer das halbe Flüssigkeitsvolumen verbraucht oder noch übrig sein. Für die Justierung der erfindunsgemäßen Einrichtung kann dies durch den Sensor oder eine entsprechende Elektronik ausgeglichen werden, aber auch auf mechanischem Wege durch Beeinflussung des Auftriebs des Schwimmers in verschiedenen Schwimmerstellungen.

Bei den Ausführungsformen nach den Fig. 1 bis 3, bei denen der Schwimmer nicht grundsätzlich, nur ering in die Flüssigkeit eintauchend, auf dieser oben schwimmt, bei denen also bei steigendem oder fallendem Füllstand sich mehr der Benetzungsgrad des Schwimmers als seine Vertikalstellung ändert, läßt sich erfindungsgemäß für entsprechende Behälterformen eine Kalibrierung der Einrichtung durch Änderung des Schwimmerquerschnitts über seine Höhe erreichen. Bei einem sich nach oben konisch verjüngenden Schwimmer z.B. würde nach dem physikalischen Gesetz, daß der Auftrieb dem Gewicht der durch denSchwimmer verdrängten Flüssigkeit entspricht, bei einem aus der Flüssigkeit auftauchenden Schwimmer der Auftrieb geringer abnehmen, als bei einem zylindrischen Schwimmer.

Eine weitere mögliche, den Erfindungsgedanken umsetzende Ausführungsform ist in den Fig. 4 und 5 veranschaulicht. Auch in diesem Fall wird der Magnet 20 in der Flüssigkeit durch den sich auf- und abwärtsbewegenden Schwimmer 21 gedreht und ändert dadurch gegenüber dem fixen Sensor 22 die Richtung seiner Feldlinien, jedoch geschieht hier die Magnetdrehung nicht in einer neben der Schwimmerachse und im Winkel zu dieser liegenden Achse, sondern in der Mittelachse 23 des Schwimmers 21.

Hierzu gleitet der Schwimmer 21 auf einer geeigneten Senkrechtführung z.B. in Bohrungen 24 auf Säulen 25, die zwischen dem Behälteroberteil 26 und Behälterunterteil 26a eingespannt sind.

Der Schwimmer 21 weist einen Schlitz 27 auf, in dem ein in sich gedrehter Streifen, eine sog. Wendel 28 geführt ist, die in Lagern 29, 29a drehbar gehalten ist. Bei der dargestellten Ausführungsform würde sich die Wendel 28 bei einer Bewegung des Schwimmers von ganz unten bis ganz oben und umgekehrt und damit auch der Magnet 20 um 180° drehen, aber auch eine geringere Drehung, z.B. mit einer Wendel, die über ihre ganze Länge die Form eines Unter- oder Oberteils der dargestellten Wendel hat, würde für die Messung der Änderung der Feldlinien-Richtung des Magnetfeldes durch einen Sensor genügen.

Um für die Justierung in den Fällen, in denen gleich Füllstandsänderungen nicht gleichen Volumenänderungen entsprechen eine mechanische Kalibrierung durch Beeinflussung der Schwimmerbewegung zu ermöglichen, kann für eine Einrichtung nach den Fig. 4 und 5 die lokale Steigung der Wendel 28 entsprechend variiert werden.

Es kommt darauf an, daß an einem feststehenden Sensor bei der Bewegung des in die nach ihrem Niveau in einem Behälter zu messende Flüssigkeit eintauchenden Schwimmers durch diesen ein Magnet vorbeigeführt wird und der Sensor je nach Lage des Schwimmers und damit des Magneten die Richtung der Feldlinien des vom Magneten erzeugten magnetischen Feldes als Parameter für den jeweiligen Füllstand der Flüssigkeit im Behälter mißt. Die dargestellten und beschriebenen Einrichtungen können aus der Vielzahl möglicher Umsetzungen dieses Gedankens in die Praxis nur Beispiele aufzeigen.

## Patentansprüche

1. Einrichtung für die insbesondere kontinuierliche Messung des Füllstandes in einem, eine Betriebs oder Verbrauchsflüssigkeit aufnehmenden Behälter mit einem in die Flüssigkeit eintauchenden, den Füllstand im Behälter darstellenden Schwimmer,
**dadurch gekennzeichnet,** daß mit dem Schwimmer (1, 10, 21) ein Magnet (3, 12, 20) verbunden ist und außerhalb der Bewegungsbahn des Schwimmers ein Sensor (8, 15, 22) angeordnet ist, der die Richtungsänderung der Feldlinien des vom Magneten erzeugten magnetischen Feldes abhängig von der Stellung und/oder Lage des durch den Schwimmers bewegten Magneten mißt und elektrisch an eine Anzeige weitergibt.

2. Einrichtung nach dem Anspruch 1,
dadurch gekennzeichnet, daß der Magnet (3) ein Bestandteil des Schwimmers (1) ist und bei der Auf- und Abbewegung des Schwimmers mit dem Magneten an einem feststehenden Sensor (8) vorbeigeführt wird.

3. Einrichtung nach dem Anspruch 1,
dadurch gekennzeichnet, daß der Magnet (12, 20) durch die Bewegung des Schwimmers (10, 21) gedreht oder verschwenkt wird.

4. Einrichtung nach dem Ansprüchen 1 bis 3,
dadurch gekennzeichnet, daß auf den Schwimmer (1, 10, 21) eine seine Auftriebskraft reduzierende Kraft ausgeübt wird.

5. Einrichtung nach den Ansprüchen 1 bis 4,
dadurch gekennzeichnet, daß die die Auftriebskraft des Schwimmers reduzierende Kraft durch eine Feder, z.B. Spiralfeder (6) oder Blattfeder (11) ausgeübt wird.

6. Einrichtung nach den Ansprüchen 1 und 3,
dadurch gekennzeichnet, daß der Magnet (12) durch den Schwimmer (10) um eine außerhalb der Schwimmerachse und im Winkel zu dieser liegenden Achse (13) verschwenkt wird.

7. Einrichtung nach den Ansprüchen 1 und 3,
dadurch gekennzeichnet, daß der Magnet (20) durch den Schwimmer (21) um eine, in der Achse (24) des Schwimmers liegende Achse gedreht wird.

8. Einrichtung nach den Ansprüchen 1, 3 und 4,
dadurch gekennzeichnet, daß der Schwimmer (10) auf seiner oberen Stirnfläche mit einem biegsamen Arm, z.B. Blattfeder (11) fest verbunden ist, dessen entgegengesetzten Ende den Magneten (12) trägt und um eine Achse (13) schwenkbar gelagert ist.

9. Einrichtung nach einem oder mehreren der Ansprüche 1 bis 8,
dadurch gekennzeichnet, daß der Schwimmer (21) bei seiner Auf- und Abbewegung eine Wendel (28) um ihre Achse drehend führt.

10. Einrichtung nach einem oder mehreren der Ansprüche 1 bis 9, dadurch gekennzeichnet, daß der Auftriebskörper (1,10) für die Beeinflussung des Auftriebs in unterschiedlichen Vertikalstellungen in der Flüssigkeit unterschiedliche horizontalquerschnitte über seine Höhe aufweist, z.B. kegelstumpf- oder pyramidenförmig gestaltet ist.

11. Einrichtung nach einem der oder mehreren der Ansprüche 1 bis 9, dadurch gekennzeichnet, daß für die Beeinflussung des Auftriebs des Auftriebskörpers (21) die Wendel (28) über ihre Höhe lokale Steigerungsänderungen aufweist.
